# EUROPÄISCHE PATENTSCHRIFT

(11) **EP 1 088 971 B1**
(45) Veröffentlichungstag und Bekanntmachung des Hinweises auf die Patenterteilung: **03.12.2003**
(21) Anmeldenummer: 00119484.4
(22) Anmeldetag: 18.09.2000
(51) Int. Cl.: F02B 23/10, F02B 17/00

(54) **Fremdgezündete Brennkraftmaschine und Verfahren zur Gemischbildung in deren Brennraum**
Spark ignited combustion engine and method of forming a mixture in the combustion chamber
Moteur à combustion à allumage commandé et procédé pour former le mélange dans la chambre de combustion

(30) Priorität: 01.10.1999 DE 19947150
(43) Veröffentlichungstag der Anmeldung: 04.04.2001
(73) Patentinhaber: Volkswagen Aktiengesellschaft, 38436 Wolfsburg (DE)
(72) Erfinder: Jelitto, Christian Dipl.-Ing., 38304 Wolfenbüttel (DE); Meyer, Henrik Dipl.-Ing., 38550 Isenbüttel (DE)

(56) Entgegenhaltungen:
- EP-A- 0 492 055
- WO-A-96/35044
- DE-A- 3 702 899
- PATENT ABSTRACTS OF JAPAN vol. 1998, no. 11, 30. September 1998 (1998-09-30) -& JP 10 176628 A (TOYOTA MOTOR CORP), 30. Juni 1998 (1998-06-30)

## Beschreibung

Die Erfindung betrifft ein Verfahren zur Gemischbildung im Brennraum einer fremdgezündeten Brennkraftmaschine mittels direkter Brennstoffeinspritzung sowie eine fremdgezündete Brennkraftmaschine mit mindestens einem Brennraum mit direkter Brennstoffeinspritzung.

Die Gemischbildung mittels direkter Brennstoffeinspritzung in den Brennraum einer Brennkraftmaschine hat in letzter Zeit insbesondere aus Gründen der Senkung des Brennstoffverbrauchs an Bedeutung gewonnen. Bei den herkömmlichen Gemischbildungsverfahren für fremdgezündete Brennkraftmaschinen wird das in dem Brennraum zu verbrennende Gemisch aus Brennstoff und Luft außerhalb des Brennraums gebildet und dann in den Brennraum eingesogen.

Grundvoraussetzung für die Zündung des Gemischs im Brennraum ist, daß zumindestens an der Zündquelle ein Gemisch mit annähernd stöchiometrischem Mischverhältnis von Brennstoff und Luft vorliegt. Nur dieses annähernd stöchiometrische Gemisch läßt sich von der Zündquelle zünden. Da bei einem heterogen, außerhalb des Brennraums gebildeten, anschließend in den Brennraum eingesogenen Gemisch nicht kontrolliert werden kann, ob der der Zündquelle nächste Teil des Gemischs tatsächlich das gewünschte stöchiometrische Mischungsverhältnis aufweist, wird bei den herkömmlichen Gemischbildungsverfahren außerhalb des Brennraums ein homogenes, annähernd stöchiometrisches Gemisch gebildet, das in den Brennraum eingesogen wird. Dieses homogene, annähernd stöchiometrische Gemisch sorgt dafür, daß im gesamten Brennraum ein zündfähiges Gemisch vorliegt, somit auch in der Nähe der Zündquelle.

Häufig wird bei dem Betrieb von Brennkraftmaschinen im sogenannten Teillastbetrieb nicht die Leistung benötigt, die bei der Verbrennung eines den Brennraum vollständig fül enden stöchiometrischen Gemischs frei würde. Im Teillastbetrieb würde auch die bei Verbrennung eines mageren Gemischs frei werdende Leistung ausreichen. Da sich das magere Gemisch jedoch nicht zünden läßt, wird bei den herkömmlichen Gemischbildungsverfahren auch im Teillastbetrieb annähernd stöchiometrisches Gemisch in den gesamten Brennraum eingebracht, um damit eine Zündung des Gemischs zu ermöglichen.

Es hat sich gezeigt, daß eine fremdgezündete Verbrennung nur für die Zündung des Gemischs ein stöchiometrisches Mischverhältnis benötigt. Die nach der Zündung fortschreitende Verbrennung des restlichen Gemischs im Brennraum kann auch bei Mischverhältnissen erfolgen, die vom stöchiometrischen Verhältnis abweichen. So kann nach erfolgreich gezündeter Verbrennung auch mageres Gemisch, also Gemisch mit einem Luftüberschuß im Vergleich zum stöchiometrischen Verhältnis, verbrannt werden.

Dieses Verhalten soll bei der Gemischbildung mittels direkter Brennstoffeinspritzung zur Senkung des Brennstoffverbrauchs ausgenutzt werden. Ziel der direkten Brennstoffeinspritzung ist es, bei der Einspritzung des Brennstoffs in die im Brennraum befindliche Luft in der Umgebung der Zündquelle ein zündfähiges Gemisch zu schaffen, während in den restlichen Teilen des Brennraums ein mageres Gemisch bereitgestellt wird.

Im Vergleich zu den herkömmlichen Gemischbildungsverfahren, bei denen im gesamten Brennraum ein homogenes, nahezu stöchiometrisches Gemisch vorliegt, liegt die Senkung des Brennstoffverbrauchs bei der Gemischbildung mit direkter Brennstoffeinspritzung in der Bereitstellung mageren Gemischs außerhalb der zündfähigen Gemischwolke. Bei der Gemischbildung mit direkter Brennstoffeinspritzung wird dadurch der Brennstoff eingespart, der bei dem herkömmlichen Verfahren dazu benötigt wird, auch außerhalb der zündfähigen Gemischwolke ein stöchiometrisches Mischverhältnis bereitzustellen.

Aus der DE 37 02 899 A1 ist ein Brennraum für eine fremdgezündete Hubkolben-Brennkraftmaschine bekannt, der zwei Einspritzdüsen aufweist. Die Einspritzdüsen sind in einem Winkel zu der Längsachse des Zylinders an dem Übergang des Zylinders zum Zylinderkopf an gegenüberliegenden Seiten des Zylinders angeordnet. Ein Teil des Brennraums dieser Brennkraftmaschine wird durch eine kugelförmige Ausnehmung in der Oberfläche des Kolbens gebildet. Diese komplizierte Kolbenstruktur weist zudem weitere Ausnehmungen auf, die von der zentralen kugelförmigen Ausnehmung zu den Einspritzdüsen führen. Die Einspritzdüsen sind derart ausgerichtet, daß ihre Einspritzstrahlen in die weiteren Ausnehmungen des Kolbens treffen.

Es ist bekannt, daß Brennstoff, der auf einen Kolben gespritzt wird, zu einem gewissen Teil an dem Kolben haften bleibt. Dieser den Kolben benetzende Brennstoff trägt nicht zur Bildung eines Gemischs im Brennraum bei. Die in den Brennraum einzuspritzende Brennstoffmenge muß somit größer sein, als die für die Gemischbildung benötigte Brennstoffmenge, da ein Teil des eingespritzten Brennstoffs an der Kolbenoberfläche haften bleibt und nicht zur Gemischbildung beiträgt.

Die vorbekannte Brennkraftmaschine ermöglicht es dabei nicht, die in den Brennraum eingespritzte Brennstoffmenge lediglich auf die für ein mageres Gemisch benötigte Menge zu beschränken.

Werter ist aus der JP 10176628 eine fremdgezündete Brennkraftmaschine bekannt wobei the Einspritzstrahlen der Einspritzdüsten im Brennraum aufeinandertreffen.

Die Aufgabe der Erfindung besteht daher darin, ein eingangs genanntes Verfahren sowie eine eingangs genannte Brennkraftmaschine vorzuschlagen, die die Verbrennung eines mageren Gemischs ermöglicht.

Diese Aufgabe wird mit einem Verfahren zur Gemischbildung im Brennraum einer fremdgezündeten Brennkraftmaschine mittels direkter Brennstoffeinspritzung dadurch gelöst, daß mindestens zwei Einspritzdüsen den Brennstoff in Form von Einspritzstrahlen in den Brennraum einbringen, daß die jeweiligen Einspritzstrahlen im Brennraum aufeinandertreffen und mit der im Brennraum befindlichen Luft eine aus Brennstoff und Luft bestehende, zündfähige Gemischwolke bilden.

Bezogen auf eine fremdgezündete Brennkraftmaschine mit mindestens einem Brennraum mit direkter Brennstoffeinspritzung wird die Aufgabe dadurch gelöst, daß jeder Brennraum mindestens zwei Einspritzdüsen aufweist, die Einspritzstrahlen erzeugen, und daß die Einspritzstrahlen derart ausgerichtet sind, daß sie aufeinandertreffen und mit der im Brennraum befindlichen Luft eine aus Brennstoff und Luft bestehende, zündfähige Gemischwolke bilden.

Mit einem nicht erfindungsgemäßen Verfahren wird im Brennraum eine Gemischwolke gebildet, indem der mittels der Einspritzdüsen in Form von Einspritzstrahlen in den Brennraum eingespritzte Brennstoff mit der im Brennraum befindlichen Luft ein zündfähiges Gemisch bildet. Die Gemischwolke entsteht dadurch, daß die Einspritzstrahlen der Einspritzdüsen im Brennraum aufeinandertreffen. So kollidieren beim Aufeinandertreffen der Einspritzstrahlen die sie bildenden kleinsten Brennstofftröpfchen miteinander. Die Kollision bremst die von den Einspritzdüsen mit hoher Geschwindigkeit ausgestoßenen Brennstoffteilchen ab, so daß diese um den Punkt des Aufeinandertreffens der Einspritzstrahlen herum eine Gemischwolke bilden. Dabei ist die mittels der Einspritzstrahlen in den Brennraum eingebrachte Brennstoffmenge derart einzustellen, daß zumindestens in der Gemischwolke ein zündfähiges Gemisch vorliegt.

Da die Einspritzstrahlen ohne vorherige Berührung mit den Wandflächen aufeinander treffen, ist sichergestellt, daß der Brennstoff nicht an den Wandflächen haften bleibt, sondern vollständig zur Bildung der Gemischwolke und des übrigen Gemischs im Brennraum verwendet wird.

Damit die derart gebildete zündfähige Gemischwolke gezündet werden kann, ist es notwendig, daß sich die Gemischwolke zum Zeitpunkt der Zündung in der Nähe der Zündkerze befindet. Dies wird erreicht, wenn die Einspritzstrahlen derart aufeinandertreffen, daß die Gemischwolke bereits beim Aufeinandertreffen der Einspritzstrahlen in räumlicher Nähe zur Zündkerze entsteht. Auf diese Weise wird dafür gesorgt, daß die Gemischwolke zum Zeitpunkt des Zündfunkens in der Nähe der Zündkerze ist und das die Gemischwolke bildende zündfähige Gemisch gezündet wird.

Je nach Position der Einspritzdüsen zueinander kann die Lage, Form und/oder das Mischverhältnis von Brennstoff und Luft der Gemischwolke im Brennraum durch Einstellen des Einspritzdrucks, des Einspritzbeginns und/oder der Einspritzdauer der einzelnen Einspritzstrahlen bestimmt werden. Soll beispielsweise die Gemischwolke im räumlichen Verhältnis der Einspritzdüsen zueinander näher zu einer Einspritzdüse erzeugt werden, so ist es sinnvoll, daß die Einspritzstrahlen dieser Einspritzdüse zu einem späteren Zeitpunkt als die der femer gelegenen Einspritzdüse eingespritzt werden, so daß das Aufeinandertreffen der Einspritzstrahlen näher zu der erstgenannten Einspritzdüse erfolgt.

Ergänzend zu der Festlegung der Lage, Form und/oder des Mischverhältnisses der Gemischwolke mittels des Einspritzdrucks, des Einspritzbeginns und/oder der Einspritzdauer der einzelnen Einspritzstrahlen wird die Lage, Form und/oder das Mischverhältnis der Gemischwolke durch eine Luftbewegung innerhalb des Brennraums eingestellt. Bei dieser Ausgestaltung wird zunächst eine Gemischwolke produziert, die in Abhängigkeit vom Einspritzdruck, dem Einspritzbeginn und/oder der Einspritzdauer der einzelnen Einspritzstrahlen entsteht. Diese Gemischwolke wird jedoch z.B. durch eine Wirbelbewegung der im Brennraum befindlichen Luft beispielsweise auseinandergezogen oder in eine andere räumliche Lage im Brennraum bewegt.

Die Luftbewegung der Luft innerhalb des Brennraums kann durch die Geometrie eines zum Brennraum führenden Ansaugrohres oder durch die Form eines das Ansaugrohr zum Brennraum hin verschließenden und zur Luftzufuhr in den Brennraum öffnenden Ventils erzeugt werden.

Die Leistungsausbeute einer Brennkraftmaschine, deren zu verbrennendes Gemisch mit dem erfindungsgemäßen Verfahren gebildet wird, hängt von der Form und Größe der Gemischwolke ab. Eine räumlich große, fette Gemischwolke führt zu einer höheren Leistung, während eine kleinere, magerere Gemischwolke zu einer niedrigeren Leistung führt. Je nach Betriebszustand des Motors ist es sinnvoll, die Lage, Form und/oder das Mischverhältnis von Brennstoff und Luft der Gemischwolke in Abhängigkeit des Betriebszustandes der Brennkraftmaschine einzustellen, um somit je nach Anforderung die notwendige Leistung der Brennkraftmaschine bereitzustellen.

Bezüglich der erfindungsgemäßen Brennkraftmaschine ist es zweckmäßig, daß der Brennraum eine zylindrische Seitenwand aufweist und daß der Brennraum zwei Einspritzdüsen aufweist, die sich in einem Winkel zur Radialebene des Brennraumes gegenüberliegen. So wird auf einfache Weise ermöglicht, daß die Einspritzstrahlen der Einspritzdüsen im Brennraum direkt aufeinandertreffen und durch dieses Aufeinandertreffen eine räumlich begrenzte Gemischwolke bilden.
Dabei ist es alternativ jedoch auch möglich drei und mehr Einspritzdüsen je Brennraum vorzusehen, um so die Lage und Ausbildung der Gemischwolke noch genauer einstellen zu können.

Die Form und Lage der Gemischwolke relativ zur Zündquelle ist unter anderem von der Luftbewegung im Brennraum abhängig, die aufgrund der Kolbenbewegungen einer Brennkraftmaschine im Brennraum erzeugt wird. Die Brennstoffeinspritzung wird in der Regel während des Kompressionszyklus des Kolbens erfolgen. Während dieses Zyklus wird die in dem Brennraum befindliche Luft durch die Aufwärtsbewegung des Kolbens nach oben bewegt und verdichtet. Es ist demnach zweckmäßig, wenn die Längsachsen der Einspritzdüsen bei einem Brennraum mit zylindrischer Seitenwand in einem Winkel zur Radialebene des Brennraums verlaufen. In diesem Fall kann der Brennstoff in Richtung auf den Kolben gespritzt werden. Durch das Aufeinandertreffen der Einspritzstrahlen wird jedoch eine Gemischwolke gebildet, bevor der Brennstoff mit der Kolbenoberfläche in Kontakt gerät. Die derart gebildete Gemischwolke wird durch die Aufwärtsbewegung des Kolbens in Richtung auf die am oberen Ende des Brennraums befindliche Zündkerze zu bewegt.

Dabei ist das erfindungsgemäße Einspritzverfahren nicht nur im Schichtladungsbetrieb, bei dem der Brennstoff erst kurz vor Erreichen der oberen Totpunktlage des Kolbens während dessen Verdichtungshub eingespritzt wird, vorteilhaft, sondern hat auch in einem sogenannten homogenen Betrieb der Brennkraftmaschine Vorteile zur Folge. Bei diesem homogenen Betrieb (λ annähernd 1) wird der Kraftstoff bereits in der Saughubphase in den Brennraum eingespritzt, wobei hier durch das Aufeinandertreffen der Einspritzstrahlen eine Benetzung der Zylinderwand vermieden werden kann, so daß unnötige Wandverluste verhindert werden können.

Die Bildung einer Gemischwolke wird besonders dann vereinfacht, wenn die Einspritzdüsen Mehrlochdüsen sind. Die Einspritzstrahlen der Einspritzdüsen bestehen dann nicht mehr aus einem einzigen Strahl, sondem aus einem Strahlenbündel. Treffen die Strahlenbündel der einzelnen Einspritzdüsen aufeinander, so wird eine Gemischwolke erzeugt.

Dabei können alternativ zu Mehrlochdüsen auch Einlochdüsen oder Einspritzdüsen anderer Bauart verwendet werden, die eine gerichtete Strahlausbildung des Einspritzstrahles ermöglichen. Dabei ist die Ausrichtung der Einspritzstrahlen an der Düse wesentlich für die Ausbildung der Gemischwolke, während die Düsenlage selbst an die Verhältnisse der Brennkraftmaschine, z.B. zur Verfügung stehender Bauraum, angepaßt werden kann

Für die sich nach der Zündung der Gemischwolke ausbreitende Flammenfront ist es unter dem Gesichtspunkt der vollständigen Verbrennung des im Brennraum befindlichen Brennstoffgemisches zweckmäßig, wenn die Form des Brennraumes an die Form der Gemischwolke angepaßt ist. Auf diese Weise kann sichergestellt werden, daß die Wände des Brennraums von der sich ausbreitenden Flammenfront annähernd zeitgleich erreicht werden, also daß die Verbrennung des Brennstoffes zu einem einheitlichen Zeitpunkt endet.

Dieser Effekt kann besonders dann erzielt werden, wenn die Form der Kolbenoberfläche nach Art einer Kolbenmulde an die Form der Gemischwolke angepaßt ist.

Das erfindungsgemäße Gemischbildungsverfahren ist dabei sowohl an fremdgezündeten Brennkraftmaschinen nach dem 4-Takt-Arbeitsverfahren als auch an Brennkraftmaschinen nach dem 2-Takt-Arbeitsverfahren möglich.

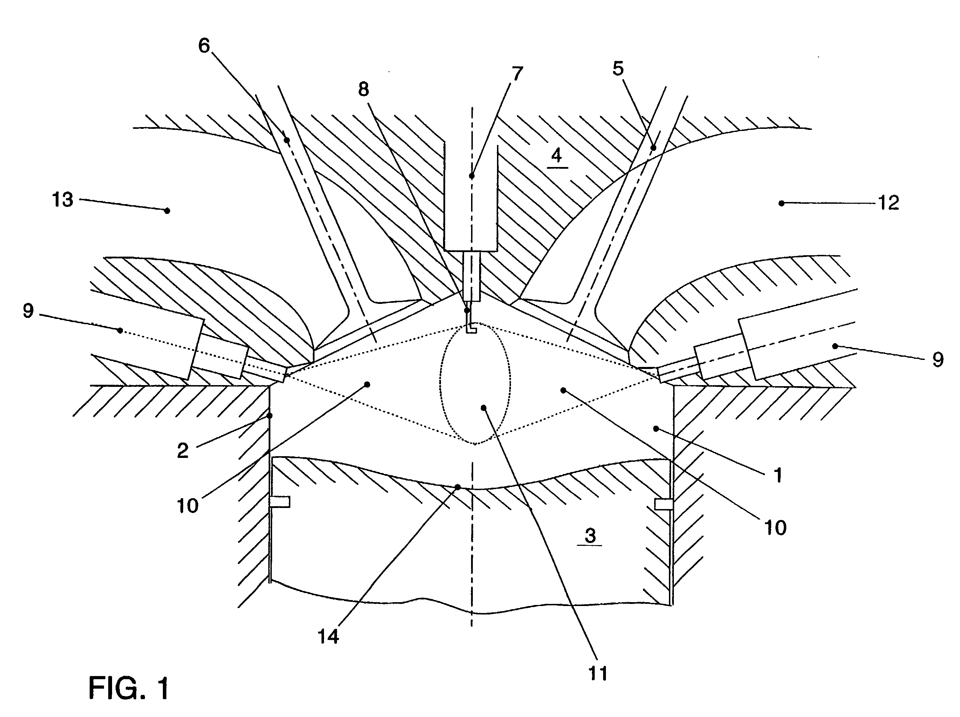

Nachfolgend wird die Erfindung anhand einer lediglich ein Ausführungsbeispiel darstellenden Zeichnung näher erläutert. Die einzige Figur der Zeichnung zeigt einen Schnitt durch den Brennraum der erfindungsgemäßen Brennkraftmaschine.

Die einzige Figur zeigt den Brennraum 1 einer Brennkraftmaschine. Der Brennraum 1 wird begrenzt durch eine zylindrische Seitenwand 2, die Oberfläche eines Kolbens 3, Teiloberflächen eines Zylinderkopfes 4, das Einlaßventil 5 und das Auslaßventil 6. Im Zylinderkopf 4 ist eine Zündkerze 7 vorgesehen, die mit ihren Zündelektroden 8 in den Brennraum 1 hineinragt. Ebenfalls sind zwei Einspritzdüsen 9 im Zylinderkopf 4 vorgesehen. Die Einspritzdüsen 9 sind so ausgerichtet, daß ihre Einspritzstrahlen 10 derart aufeinandertreffen, daß sie in örtlicher Nähe zu den Zündelektroden 8 der Zündkerze 7 eine Gemischwolke 11 bilden.

Im Zylinderkopf 4 ist ein Ansaugrohr 12 vorgesehen, das zum Brennraum 1 hin mit dem Einlaßventil 5 verschlossen werden kann. Ebenfalls ist im Zylinderkopf 4 ein Auslaßrohr 13 vorgesehen, das zum Brennraum 1 hin mit dem Auslaßventil 6 verschlossen werden kann.

Der Kolben 3 der Brennkraftmaschine weist eine Kolbenmulde 14 auf.

Die dargestellte und insofern bevorzugte Brennkraftmaschine arbeitet nach dem bekannten Vier-Takt-Prinzip. Während des sogenannten "Ansaugtakts" bewegt sich der Kolben 3 vom Zylinderkopf 4 weg nach unten, wobei durch das geöffnete Einlaßventil 5 Frischluft in den Brennraum 1 gesaugt wird. Nach Erreichen seines unteren Totpunkts bewegt sich der Kolben 3 im sogenannten "Kompressions-Takt" wieder auf den Zylinderkopf 4 zu. Bei nunmehr geschlossenem Einlaßventil 5 komprimiert er dabei die im Brennraum 1 befindliche Luft. Die im Brennraum 1 befindliche Luft kann sich, je nach Ausgestaltungen des Ansaugrohrs 12 und der Ventiloberfläche des Einlaßventils 5 innerhalb des Brennraums 1 in einer Wirbelbewegung sowohl um die Längsachse des Brennraums, als auch um eine Querachse befinden.

Während des Kompressions-Takts spritzen die Einspritzdüsen 9 zu einem vom Betriebszustand der Brennkraftmaschine abhängigen Zeitpunkt den Brennstoff in Form von Einspritzstrahlen 10 in den Brennraum. Diese treffen im Brennraum aufeinander und bilden eine Gemischwolke 11. Die Gemischwolke 11 enthält genügend Brennstoff, um ein zündfähiges Gemisch zu bilden. Außerhalb der Gemischwolke 11 befindet sich lediglich genügend Brennstoff zur Bildung eines sogenannten mageren Gemischs (Luftüberschuß). Zu einem vom Betriebszustand der Brennkraftmaschine abhängigen Zeitpunkt zündet die Zündkerze 7 mittels der Zündelektroden 8 einen Zündfunken, der die Zündung der Verbrennung der Gemischwolke 11 zur Folge hat. Die auf diese Art initiierte Verbrennung dehnt sich über den gesamten Brennraum 1 aus und verbrennt dabei auch das außerhalb der Gemischwolke 11 befindliche magere Gemisch.

Die Kolbenmulde 14 des Kolbens 3 ermöglicht es, daß sich die von der Gemischwolke 11 ausbreitende Flammfront der Verbrennung gleichmäßig auf die Wände 2 des Brennraums 1 zubewegt und die Wände 2 fast gleichzeitig erreicht. Auf diese Weise wird eine möglichst vollständige Verbrennung des im Brennraum 1 befindlichen Brennstoffs 1 gewährleistet.

Während der Verbrennung wird der Kolben 3 durch das gezündete Gemisch vom Zylinderkopf 4 weggedrückt und bewegt sich in einem Expansionshub nach unten. Nach Erreichen seines unteren Totpunkts bewegt sich der Kolben 3 wiederum nach oben und schiebt das verbrannte Gemisch durch das geöffnete Auslaßventil 6 in das Auslaßrohr 13. Nach erneutem Erreichen des oberen Totpunkts des Kolbens 3 schließt das Auslaßventil 6 und das Einlaßventil 5 öffnet, so daß der Ansaugtakt erneut beginnen kann.

## Patentansprüche

1. Verfahren zur Gemischbildung im Brennraum (1) einer fremdgezündeten Brennkraftmaschine mittels direkter Brennstoffeinspritzung, wobei mindestens zwei gegenüberliegende Einspritzdüsen (9), deren Längsachsen in einem Winkel zur Radialebene des zylinder förmigen Brennraumes stehen, den Brennstoff in Form von Einspritzstrahlen (10) in den Brennraum (1) einbringen, derart daß die jeweiligen Einspritzstrahlen (10) im Brennraum (1) aufeinandertreffen und mit der in dem Brennraum (1) befindlichen Luft eine aus Brennstoff und Luft bestehende, zündfähige Gemischwolke (11) bilden, wobei die Lage, Form und/oder das Mischverhältnis von Brennstoff und Luft der Gemischwolke (11) durch eine Luftbewegung innerhalb des Brennraumes (1) eingestellt wird und wobei die Luftbewegung durch die Geometrie eines zu dem Brennraum (1) führenden Ansaugrohres (12) oder durch die Form eines Ventils (5) erzeugt wird, das das Ansaugrohr (12) zum Brennraum (1) hin verschließen kann.

2. Verfahren nach Anspruch 1, **dadurch gekennzeichnet, daß** die Einspritzstrahlen (10) derart aufeinandertreffen, daß eine räumlich kompakte Gemischwolke (11) entsteht.

3. Verfahren nach Anspruch 1 oder 2, **dadurch gekennzeichnet, daß** die Einspritzstrahlen derart aufeinandertreffen, daß die Gemischwolke (11) in räumlicher Nähe einer Zündkerze (7) der Brennkraftmaschine entsteht.

4. Verfahren nach einem der Ansprüche 1 bis 3, **dadurch gekennzeichnet, daß** durch Einstellen des Einspritzdrucks, des Einspritzbeginns und/oder der Einspritzdauer der einzelnen Einspritzstrahlen (10) die Lage, Form und/oder das Mischverhältnis von Brennstoff und Luft der Gemischwolke (11) im Brennraum (1) bestimmt wird.

5. Verfahren nach einem der Ansprüche 1 bis 4, **dadurch gekennzeichnet, daß** die Lage, Form und/oder das Mischverhältnis von Brennstoff und Luft der Gemischwolke (11) in Abhängigkeit des Betriebszustandes der Brennkraftmaschine unterschiedlich eingestellt wird.

6. Fremdgezündete Brennkraftmaschine mit mindestens einem Brennraum (1) mit direkter Brennstoffeinspritzung, bei der jeder Brennraum (1) mindestens zwei Einspritzdüsen aufweist, die Einspritzstrahlen (10) erzeugen, wobei die Einspritzstrahlen (10) derart ausgerichtet sind, daß sie aufeinandertreffen und mit der in dem Brennraum (1) befindlichen Luft eine aus Brennstoff und Luft bestehende, zündfähige Mischwolke (11) bilden, wobei der Brennraum (1) eine zylindrische Seitenwand (2) aufweist und wobei jeder Brennraum (1) zwei Einspritzdüsen (9) aufweist, die sich gegenüberliegen, **dadurch gekennzeichnet, daß** die Längsachsen der gegenüberliegenden Einspritzdüsen (9) in einem Winkel zur Radialebene des zylinderförmigen Brennraumes (1) stehen.

7. Brennkraftmaschine nach Anspruch 6, **dadurch gekennzeichnet, daß** die Einspritzdüsen (9) als Lochdüsen, vorzugsweise Mehrlochdüsen ausgebildet sind.

8. Brennkraftmaschine nach Anspruch 6, **dadurch gekennzeichnet, daß** die Form des Brennraumes (1) an die Form der Gemischwolke (11) angepaßt ist.

9. Brennkraftmaschine nach einem der Ansprüche 6 bis 8, **dadurch gekennzeichnet, daß** die Form der Oberfläche des Kolbens (3) nach Art einer Kolbenmulde (14) an die Form der Gemischwolke (11) angepaßt ist.

## Claims

1. Method for mixture formation in the combustion space (1) of a spark-ignition internal combustion engine by means of direct fuel injection, at least two mutually opposite injection nozzles (9), the longitudinal axes of which are at an angle to the radial plane of the cylindrical combustion space, introducing the fuel in the form of injection jets (10) into the combustion space (1), in such a way that the respective injection jets (10) meet one another in the combustion space (1) and form, with the air located in the combustion space (1), an ignitable mixture cloud (11) consisting of fuel and air, the position, shape and/or mixture ratio of fuel and air of the mixture cloud (11) being set by air movement within the combustion space (1), and the air movement being generated by the geometry of an intake pipe (12) leading to the combustion space (1) or by the shape of a valve (5) which can conclude the intake pipe (12) in relation to the combustion space (1).

2. Method according to Claim 1, **characterized in that** the injection jets (10) meet one another in such a way that a spatially compact mixture cloud (11) is obtained.

3. Method according to Claim 1 or 2, **characterized in that** the injection jets meet one another in such a way that the mixture cloud (11) occurs in spatial proximity to a spark plug (7) of the internal combustion engine.

4. Method according to one of Claims 1 to 3, **characterized in that** the position, shape and/or mixture ratio of fuel and air of the mixture cloud (11) in the combustion space (1) is determined by the setting of the injection pressure, of the start of injection and/or of the injection duration of the individual injection jets (10).

5. Method according to one of Claims 1 to 4, **characterized in that** the position, shape and/or mixture ratio of fuel and air of the mixture cloud (11) are set differently as a function of the operating state of the internal combustion engine.

6. Spark-ignition internal combustion engine with at least one combustion space (1) with direct fuel injection, in which each combustion space (1) has at least two injection nozzles which generate injection jets (10), the injection jets (10) being oriented in such a way that they meet one another and form, with the air located in the combustion space (1), an ignitable mixture cloud (11) consisting of fuel and air, the combustion space (1) having a cylindrical side wall (2), and each combustion space (1) having two mutually opposite injection nozzles (9), **characterized in that** the longitudinal axes of the mutually opposite injection nozzle (9) are at an angle to the radial plane of the cylindrical combustion space (1).

7. Internal combustion engine according to Claim 6, **characterized in that** the injection nozzles (9) are designed as hole nozzles, preferably multiple-hole nozzles.

8. Internal combustion engine according to Claim 6, **characterized in that** the shape of the combustion space (1) is adapted to the shape of the mixture cloud (11).

9. Internal combustion engine according to one of Claims 6 to 8, **characterized in that** the shape of the surface of the piston (3) is adapted to the shape of the mixture cloud (11) in the manner of a piston recess (14) .

## Revendications

1. Procédé pour former le mélange dans la chambre de combustion (1) d'un moteur à combustion à allumage commandé, par injection directe de carburant, dans lequel au moins deux injecteurs (9) se faisant face, dont les axes longitudinaux se situent dans un angle par rapport au plan radial de la chambre de combustion cylindrique, alimentent le carburant dans la chambre de combustion (1) sous forme de jets injectés (10), de façon à ce que les jets injectés (10) se rencontrent dans la chambre de combustion (1) et forment avec l'air présent dans la chambre de combustion (1) un nuage de mélange (11) inflammable composé de carburant et d'air, la position, la forme et/ou le rapport de mélange du carburant et de l'air du nuage de mélange (11) étant ajustés par un déplacement d'air à l'intérieur de la chambre de combustion (1), et le déplacement d'air étant produit par la géométrie d'une tubulure d'aspiration (12) conduisant à la chambre de combustion (1) ou par la forme d'une soupape (5) qui peut obturer la tubulure d'aspiration (12) dans la direction de la chambre de combustion (1).

2. Procédé selon la revendication 1, **caractérisé en ce que** les jets injectés (10) se rencontrent de manière à ce qu'il se forme un nuage de mélange (11) compact dans l'espace.

3. Procédé selon la revendication 1 ou 2, **caractérisé en ce que** les jets injectés se rencontrent de manière à ce que le nuage de mélange (11) se forme à proximité d'une bougie d'allumage (7) du moteur à combustion.

4. Procédé selon l'une des revendications 1 à 3, **caractérisé en ce que** par ajustement de la pression d'injection, du début de l'injection et/ou de la durée d' injection des différents jets injectés (10), la position, la forme et/ou le rapport de mélange du carburant et de l'air du nuage de mélange (11) dans la chambre de combustion (1) sont déterminés.

5. Procédé selon l'une des revendications 1 à 4, **caractérisé en ce que** la position, la forme et/ou le rapport de mélange du carburant et de l'air du nuage de mélange (11) sont ajustés différemment en fonction du régime de fonctionnement du moteur à combustion.

6. Moteur à combustion à allumage commandé, comprenant au moins une chambre de combustion (1) avec injection directe de carburant, dans lequel chaque chambre de combustion (1) présente au moins deux injecteurs qui produisent des jets injectés (10), les jets injectés (10) étant orientés de manière à se rencontrer et à former avec l'air présent dans la chambre de combustion (1) un nuage de mélange (11) inflammable composé de carburant et d'air, la chambre de combustion (1) présentant une paroi latérale (2) cylindrique, et chaque chambre de combustion (1) présentant deux injecteurs (9) qui se font face, **caractérisé en ce que** les axes longitudinaux des injecteurs (9) se faisant face font un angle par rapport au plan radial de la chambre de combustion cylindrique (1) .

7. Moteur à combustion selon la revendication 6, **caractérisé en ce que** les injecteurs (9) sont des injecteurs perforés, de préférence des injecteurs multitrous.

8. Moteur à combustion selon la revendication 6, **caractérisé en ce que** la forme de la chambre de combustion (1) est adaptée à la forme du nuage de mélange (11) .

9. Moteur à combustion selon l'une des revendications 6 à 8, **caractérisé en ce que** la forme de la surface du piston (3) est adaptée à la forme du nuage de mélange (11), en présentant un enfoncement (14).
